# EUROPÄISCHE PATENTSCHRIFT

(11) **EP 0 818 343 B1**
(45) Veröffentlichungstag und Bekanntmachung des Hinweises auf die Patenterteilung: **03.03.1999**
(21) Anmeldenummer: 97401520.8
(22) Anmeldetag: 30.06.1997
(51) Int. Cl.: B60M 1/28, B21C 37/04, B23K 20/04

(54) **Verfahren zum Herstellen eines Fahrdrahtes für die Stromversorgung elektrisch angetriebener Fahrzeuge**
Method of fabricating a catenary wire for supplying current to electrically driven vehicles
Procédé de fabrication d'une caténaire pour l'alimentation en courant des véhicules à propulsion électrique

(30) Priorität: 09.07.1996 DE 19627612
(43) Veröffentlichungstag der Anmeldung: 14.01.1998
(73) Patentinhaber: ALCATEL, 75008 Paris (FR)
(72) Erfinder: Ziemek, Gerhard, Dr.-Ing., 30853 Langenhagen (DE)
(74) Vertreter: Mende, Eberhard, Dipl.-Ing.

(56) Entgegenhaltungen:
- DE-A- 3 403 872

## Beschreibung

Die Erfindung betrifft ein Verfahren zur Herstellung eines Fahrdrahtes für die Stromversorgung elektrisch angetriebener Fahrzeuge.

Aus der EP-A- 0298518 ist ein Fahrdraht bekannt, welcher aus einem kupferummantelten Stahldraht besteht. Die Ummantelung macht bei diesem Fahrdraht zwischen 45 und 75 % des Querschnitts des Fahrdrahtes aus und ist metallurgisch mit dem Stahdraht verbunden.

Zur Herstellung eines solchen Fahrdrahtes wird ein kalter weicher Stahldraht geschält und in ein Bad aus geschmolzenem Kupfer eingetaucht, so daß eine Kupferschicht an der Oberfläche des Stahldrahtes erstarrt. Anschließend wird der so erzielte Strang bei einer Temperatur zwischen 750 und 850 °C gewalzt und der Querschnitt um 10 bis 40 % reduziert. Diese Vorgänge werden solange wiederholt, bis die gewünschte Schichtdicke der Kupferumhüllung erreicht ist.

Dieses unter dem Namen "Dip-forming" bekanntgewordene Verfahren ist sehr zeitaufwendig und kostenintensiv. Bei diesem Fahrdraht wird in Kauf genommen, daß die Kupferummantelung durch den Stromabnehmer im Laufe der Zeit abgeschliffen wird und der Stromabnehmer in direktem Kontakt mit dem Stahdraht gelangt.

Aus der DE-A- 3403872 ist ein Verfahren zur Herstellung eines Fahrdrahtes bekannt, bei dem ein Stahldraht in kontinuierlicher Arbeitsweise von einem Kupferband umhüllt und mittels einer Walzvorrichtung zu einem kupferummantelten Stahldraht geformt wird. Im selben Walzvorgang wird ein Draht aus einer verschleißfesten Kupferlegierung mit dem Kupferband verbunden, bei 950°C im Walzspalt und einer gemeinsamen Querschnittsabnahme von mindestens 20%. In anschließenden Arbeitsgängen wird das Verbundelement durch Walzen oder Ziehen bei Raumtemperatur zu dem gewünschten Querschnittsprofil verformt. Der Draht aus der verschleißfesten Kupferlegierung ist im Betriebszustand mit dem Stromabnehmer in Kontakt. Sowohl der kupferummantelte Stahldraht als auch der Draht aus der verschleißfesten Kupferlegierung übernehmen die Spannkraft, wogegen die Kupferummantelung und der Draht aus der verschleißfesten Kupferlegierung für die Stromleitung herausgezogen werden. Trotz der Verwendung einer verschleißfesten Kupferlegierung ist mit einem Abrieb durch den Stromabnehmer zu rechnen, so daß der Fahrdraht im Laufe der Zeit sowohl den stromtragenden als auch den die Zugkräfte aufnehmenden Querschnitt verliert.

Darüber hinaus ist die gleichzeitige Vereinigung eines Stahldrahtes, eines Kupferbandes und eines Drahtes aus einer Kupferlegierung mit großen Problemen behaftet. Zusätzlich sind noch für die Erreichung der hohen Verschleißfestigkeit Vergütungsmaßnahmen für den Kupferlegierungsdraht durchzuführen.

Der vorliegenden Erfindung liegt von daher die Aufgabe zugrunde, ein Verfahren zur Herstellung eines Fahrdrahtes anzugeben, bei welchem der mit dem Stromabnehmer in Kontakt gelangende Bereich des Fahrdrahtes einen zugfesten Kern aus einem hochfesten Stahldraht aufweist und die Stromleitung von einem Kupferdraht aufgenommen wird, und wobei die Probleme der gleichzeitigen Vereinigung eines Stahldrahtes, eines Kupferbandes und eines Drahtes aus einer Kupferlegierung vermieden werden.

Diese Aufgabe wird durch die im Anspruch 1 erfaßten Merkmale gelöst.

Dadurch, daß das zweite Teilband für die Ummantelung des Stahldrahtes aus einer hochfesten Kupferlegierung besteht, wird der Abrieb durch den Stromabnehmer wesentlich verringert. Der Stahldraht ist bezüglich seinem Querschnitt und seiner Legierung so bemessen, daß die für höhere Fahrgeschwindigkeiten erforderliche höhere Zugspannung im Fahrdraht vom Stahldraht aufgenommen wird. Der Kupferdraht dient im wesentlichen der Stromleitung, sein Querschnitt ist dementsprechend auszuwählen.

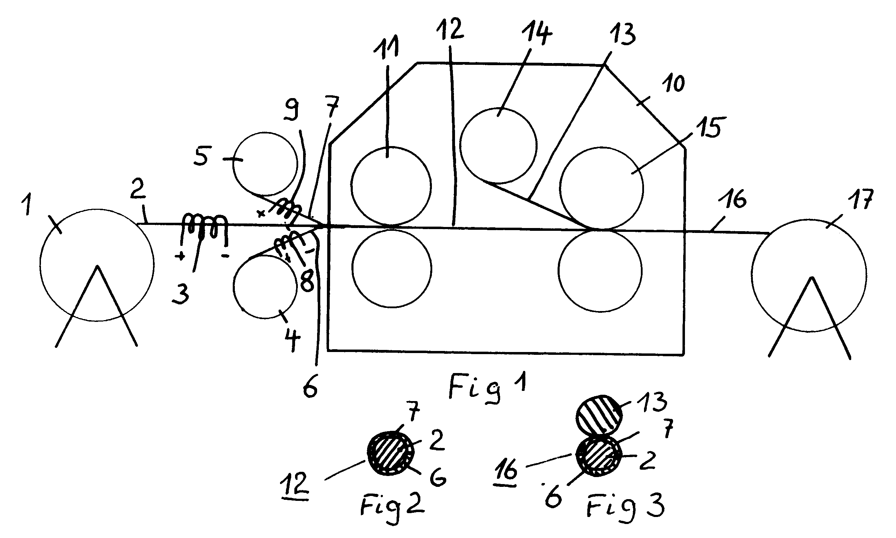

Die Erfindung ist anhand der in den Figuren 1 bis 3 schematisch dargestellten Ausführungsbeispiele näher erläutert.

Von einer Vorratsspule 1 wird ein hochfester Stahldraht 2 kontinuierlich abgezogen, in nicht dargestellter Weise gereinigt, z. B. durch Beizen oder Bürsten und in einer Heizvorrichtung 3 auf eine Temperatur von mehr als 950 °C aufgezeizt. Gleichzeitig werden von den Vorratsspulen 4 und 5 zwei Teilbänder 6 und 7 abgewickelt und um den Stahldraht 2 herum zu einer in sich geschlossenen Hülle geformt. Die der Stahldrahtoberfläche zugekehrten Oberflächen der Teilbänder 6 und 7 werden ebenfalls z. B. durch Bürsten gereinigt. Vor dem Auflegen auf den Stahldraht 2 werden die Teilbänder 6 und 7 durch Heizvorrichtungen 8 und 9 auf eine Temperatur von über 950 °C aufgeheizt. Die Teilbänder 6 und 7 bestehen aus Kupfer, das Teilband 6 kann jedoch aus einer abriebfesten Kupferlegierung, wie beispielsweise Zinnbronze, bestehen.

Der Stahldraht 2 sowie die auf seine blanke Oberfläche aufgelegten Teilbänder 6 und 7 werden in ein Gehäuse 10 eingefahren, in welchem eine Schutzgasatmosphäre, vorzugsweise eine reduzierende Atmosphäre, und eine Temperatur von ca. 950 °C vorherrscht. In einem ersten Walzenpaar 11, werden die Teilbänder 6 und 7 auf die Oberfläche des Stahldrahtes 2 aufgewalzt und dabei gleichzeitig der Querschnitt des aus dem Stahldraht 2 und den Teilbändern 6 und 7 hergestellte Verbunddraht um ca. 20 % in seinem Querschnitt reduziert. Gleichzeitig werden die Längsnähte zwischen den Teilbändern 6 und 7 geschlossen.

Das Bürsten des Stahldrahtes 2 und der Teilbänder 6 und 7 wird vorteilhafterweise im Innern des Gehäuses 10 vorgenommen.

Dem im Querschnitt reduzierten Verbunddraht 12 wird kontinuierlich ein blanker, oxidfreier Kupferdraht 13 zugeführt, der von einer Vorratsspule 14 abgezogen wird. In einem zweiten Walzenpaar 15 werden der Verbunddraht 12 und der Kupferdraht 13 metallurgisch miteinander verbunden. Auch hier erfolgt der Walzvorgang mit einer Querschnittsreduzierung von ca. 20 %.

Der aus dem Verbunddraht 12 und dem angewalzten Kupferdraht 13 bestehende Vordraht 16 wird dann anschließend auf eine Vorratsspule 17 aufgewickelt.

Der Vordraht 16 wird dann in einem oder mehreren Walz-oder Ziehvorgängen bei Raumtemperatur auf den gewünschten Querschnitt geformt.

Als Fahrdraht übernimmt der Kupferdraht 13 den Großteil der Stromleitung, der kupferummantelte Stahldraht sowohl die Spannkraft als auch die Reibung des Stromabnehmers.

## Patentansprüche

1. Verfahren zum Herstellen eines Fahrdrahtes für die Stromversorgung elektrisch angetriebener Fahrzeuge, bestehend aus einem kupferumhüllten Stahldraht sowie einem metallisch mit dem kupferumhüllten Stahldraht verbundenen Kupferdraht, umfassend folgende Maßnahmen
a) ein auf zwischen 900 und 950 °C vorgeheizter Stahldraht (2) wird von zwei ebenfalls auf 900 - 950 °C erhitzten Teilbändern (6,7) unter Schutzgas bzw. in einer reduzierenden Gasatmosphäre vollständig umhüllt, wobei das erste Teilband (7) aus Kupfer und das zweite Teilband (6) aus Kupfer oder einer hochfesten Kupferlegierung besteht
b) die Teilbänder (6,7) werden bei einer Temperatur von 900 bis 950 °C durch Walzen mit der Oberfläche des Stahldrahtes (2) metallisch verbunden
c) beim Walzvorgang wird der Querschnitt des Verbundelementes (12) aus dem Stahldraht und den Teilbändern um mindestens 20 % im Querschnitt reduziert
d) ein ebenfalls auf 900 - 950 °C vorgeheizter Kupferdraht (13) wird bei 900 - 950 °C unter Schutzgas bzw. in einer reduzierenden Gasatmosphäre mit dem Verbundelement (12) in dessen vom ersten Teilband (7) überdeckten Bereich durch Walzen metallisch verbunden
e) das endgültige Querschnittsprofil des Fahrdrahtes wird durch Walzen und/oder Ziehen bei Raumtemperatur hergestellt.

2. Verfahren nach Anspruch 1, dadurch gekennzeichnet, daß für das zweite Teilband (6) eine Zinnbronze verwendet wird.

## Claims

1. Process for the manufacture of a contact wire for supplying current to an electrically-propelled vehicle, consisting of a copper-clad steel wire and a copper wire bonded metallically to the copper-clad steel wire, comprising the following steps:
a) a steel wire (2) pre-heated to between 900 and 950°C is completely wrapped in two strips (6,7), similarly heated to 900-950°C, under a shielding gas or in a reducing gas atmosphere, where the first strip (7) consists of copper and the second strip (6) consists of copper or of a high-strength copper alloy
b) the strips (6,7) are metallically bonded to the surface of the steel wire (2) by rolling at a temperature of 900-950°C
c) in the rolling process, the section of the composite (12) of the steel wire and the strips is reduced in cross-section by at least 20%
d) a copper wire (13), likewise pre-heated to 900-950°C, is bonded at 900-950°C to the composite (12) in the region covered by the first strip (7) by rolling under a shielding gas or in a reducing gas atmosphere
e) the final cross-sectional profile of the contact wire is produced by rolling and/or drawing at room temperature.

2. Process in accordance with Claim 1, characterised in that a tin bronze is used for the second strip (6).

## Revendications

1. Procédé de fabrication d'un fil de contact destiné à l'alimentation électrique des véhicules actionnés par voie électrique, formé par un fil en acier protégé par une gaine en cuivre, ainsi qu'un fil de cuivre relié par voie métallique au fil en acier gainé de cuivre, lequel procédé comprend les mesures suivantes :
a) un fil en acier (2) préchauffé entre 900 et 950 °C est gainé entièrement, sous atmosphère contrôlée ou dans une atmosphère de gaz réducteur, avec deux bandes partielles (6, 7), également chauffées entre 900 et 950 °C, la premier bande partielle (7) étant en cuivre et la deuxième bande partielle (6) étant en cuivre ou en alliage de cuivre à résistance élevée,
b) les bandes partielles (6, 7) sont liées à la surface du fil en acier (2), métalliquement par laminage à une température comprise entre 900 et 950 °C,
c) pendant le processus de laminage, la section du fil composite (12), formé par la liaison du fil en acier (2) avec les bandes partielles, est réduite de 20 % au moins sur la section,
d) un fil de cuivre (13), également chauffé entre 900 et 950 °C, est relié métalliquement par laminage avec le fil composite (12) dans sa partie recouverte par la première bande partielle (7), entre 900 et 950 °C sous atmosphère contrôlée ou dans une atmosphère de gaz réducteur,
e) le profil transversal final du fil de contact est obtenu par laminage et/ou tréfilage à température ambiante.

2. Procédé selon la revendication 1, caractérisé en ce que la deuxième bande partielle (6) est réalisée en bronze.
